Europäisches Patentamt

European Patent Office

Office européen des brevets

(11) Veröffentlichungsnummer : **0 127 921**
**B1**

(12) # EUROPÄISCHE PATENTSCHRIFT

(45) Veröffentlichungstag der Patentschrift :
02.12.87

(21) Anmeldenummer : **84200768.4**

(22) Anmeldetag : **25.05.84**

(51) Int. Cl.⁴ : **B 62 D 53/08**

(54) Kupplungseinrichtung für einen Sattelanhänger.

(30) Priorität : 26.05.83 NL 8301881

(43) Veröffentlichungstag der Anmeldung :
12.12.84 Patentblatt 84/50

(45) Bekanntmachung des Hinweises auf die Patenterteilung : 02.12.87 Patentblatt 87/49

(84) Benannte Vertragsstaaten :
AT BE CH DE FR GB IT LI NL SE

(56) Entgegenhaltungen :
US-A- 2 328 387
US-A- 3 181 889

(73) Patentinhaber : Bulthuis' Carrosserie- en Wagenfabriek B.V.
Noordwolderweg 31
NL-9784 PA Noordwolde (NL)

(72) Erfinder : Bulthuis, Alf Klaas
Noordwolderweg 35
NL-9784 PA Noordwolde (NL)

(74) Vertreter : Urbanus, Henricus Maria, Ir. et al
c/o Vereenigde Octrooibureaux Nieuwe Parklaan 107
NL-2587 BP 's-Gravenhage (NL)

Jouve, 18, rue St-Denis, 75001 Paris, France

## Beschreibung

Die Erfindung bezieht sich auf eine Kupplungseinrichtung zum Kuppeln eines Sattelschleppers mit einem Sattelanhänger, versehen mit einem Drehkranz, der Rotation des Sattelschleppers relativ zum Sattelanhänger zulässt, und der einen ersten Teil umfasst, der im Betriebszustand drehfest mit dem Gestell des Sattelschleppers gekuppelt ist und einen zweiten Teil, der im Betriebszustand drehfest mit dem Gestell des Sattelanhängers gekuppelt ist, wobei einer der Teile des Drehkranzes in einem relativ zum korrespondierenden Gestell in dessen Längsrichtung verschiebbaren Hilfsrahmen montiert ist, und wobei Betätigungsmittel vorgesehen sind, die die Schiebelage des Hilfsrahmens abhängig vom Winkel zwischen dem Sattelschlepper und dem Sattelanhänger so einstellen, dass der Abstand zwischen dem Sattelschlepper und dem Sattelanhänger bei Rotation des Sattelschleppers relativ zum Sattelanhänger aus der Lage für die Geradeausfahrt zunimmt.

Eine solche Kupplungseinrichtung ist aus der US-A-3.181.889 bekannt. Die bekannte Kupplungseinrichtung umfasst einen im Gestell des Sattelschleppers montierten verschiebbaren Hilfsrahmen, der im Betrieb mit dem Sattelanhänger gekuppelt ist. Der Hilfsrahmen kann mittels hydraulischer Zylinder verschoben werden, um beim Nehmen einer Kurve den Abstand zwischen dem Sattelschlepper und dem Sattelanhänger zu vergrössern, so dass vermieden wird, dass die Fahrerkabine des Sattelschleppers und der Sattelanhänger miteinander in Berührung kommen. Zum Steuern der hydraulischen Zylinder ist eine drehbare Nockenscheibe vorgesehen, die am Hilfsrahmen montiert ist, und die über einen zusätzlichen Kupplungsarm drehfest mit der Vorderseite des Sattelanhängers gekuppelt ist. Die Nockenscheibe arbeitet weiter mit einem Hebel zusammen, der wieder über ein Seil ein hydraulisches Steuerventil betätigt. Das Steuerventil steuert schliesslich die hydraulischen Zylinder zum Verschieben des Hilfsrahmens.

Es ist ein Nachteil dieser bekannten Einrichtung, dass man beim Ankuppeln des Sattelanhängers einen zusätzlichen, teleskopisch ausgebildeten Kupplungsarm braucht, und dass die bekannte Einrichtung verhältnismässig kompliziert und dadurch störanfällig und teuer ist. Es ist daher Aufgabe der Erfindung, die bekannte Kupplungseinrichtung zu vereinfachen und im allgemeinen eine zweckmässige, robuste und einfache Kupplungseinrichtung der oben beschriebenen Art zur Verfügung zu stellen.

Dazu wird erfindungsgemäss eine Einrichtung der beschriebenen Art dadurch gekennzeichnet, dass die Betätigungsmittel mindestens einen Hebel umfassen, dessen eines Ende mit einem festen Punkt des den verschiebbaren Hilfsrahmen enthaltenden Gestells verbunden ist, und dass das andere Ende des mindestens einen Hebels mit einem am Hilfsrahmen montierten Zahnrad gekuppelt ist, das durch eine am anderen Teil des Drehkranzes angeordnete Verzahnung angetrieben wird.

Es wird bemerkt, dass aus der US-A-2.328.387 ebenfalls eine Kupplungseinrichtung der oben beschriebenen Art bekannt ist, wobei der Drehkranz verschiebbar im Gestell des Sattelanhängers montiert ist und wobei die Schiebelage des Drehkranzes durch einen mit der Vorderseite des Sattelanhängers verbundenen Hebel bestimmt wird. Dieser bekannte Hebel ist jedoch nicht mit einem gesonderten, durch eine am Drehkranz angeordnete Verzahnung angetriebenen Zahnrad verbunden.

Im Nachstehenden wird die Erfindung unter Hinweis auf die beigefügte Zeichnung näher beschrieben.

Es zeigen :

Figur 1 schematisch die Folgen eines zu kleinen Abstandes zwischen Fahrerkabine und Sattelanhänger bei Anwendung einer Kupplungseinrichtung gemäss der bestehenden Technik ;

Figur 2 den der Erfindung zugrunde liegenden Basisgedanken in schematischer Darstellung ;

Figur 3 schematisch eine Draufsicht einer Ausführungsform der Erfindung.

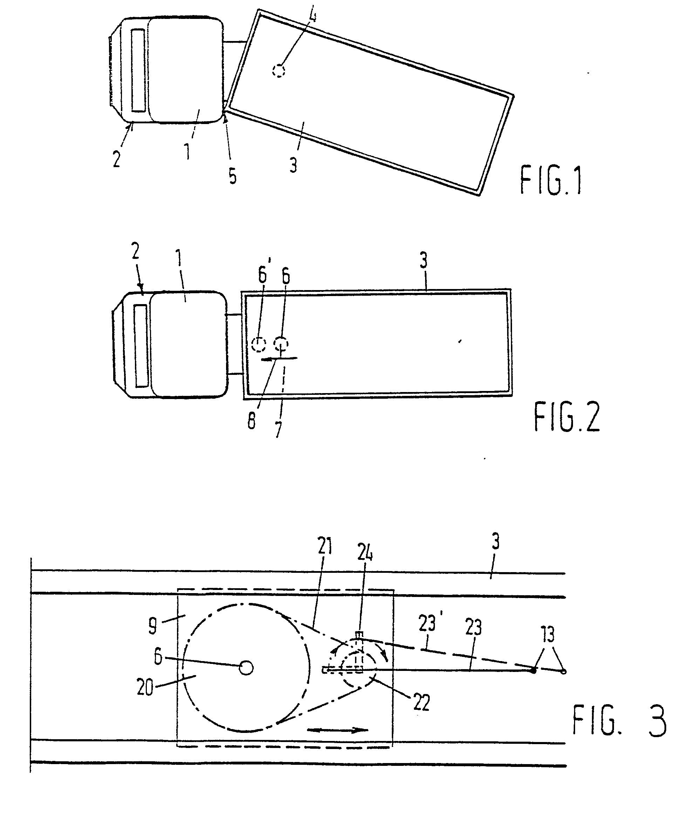

Figur 1 zeigt schematisch die Folgen eines zu kleinen Abstandes zwischen der Fahrerkabine 1 eines Sattelschleppers 2 und einem mit dem Schlepper gekuppelten Sattelanhänger 3. Die Schlepper-Anhänger-Kombination ist in der Stellung gezeichnet, die beim Nehmen einer linken Kurve entsteht. Der Kupplungspunkt, der gleichfalls der Drehpunkt des Schleppers in bezug auf den Anhänger ist, wird bei 4 angegeben. Sobald der Schlepper über einen gewissen Winkel in bezug auf den Anhänger gedreht ist, stösst die Vorderseite des Anhängers bei 5 gegen die Fahrerkabine 1.

Dieser Effekt kann nur dadurch vermieden werden, dass zwischen der Vorderseite des Anhängers und der Kabine des Schleppers ein verhältnismässig grosser Raum freigehalten wird.

Dieser Zwischenraum geht dann jedoch als potentieller Laderaum verloren.

Figur 2 zeigt den Basisgedanken der Erfindung. Der Sattelanhänger 3 ist mit einem Kupplungsbolzen 6 mit dem Sattelschlepper 2 gekuppelt. Der Kupplungsbolzen, der gleichfalls den Drehpunkt zwischen Schlepper und Anhänger bildet, kann jetzt jedoch in bezug auf das Gestell 7 des Anhängers verschieben, wie mit einem Pfeil 8 angegeben ist, und zwar derart, dass beim Nehmen einer Kurve der Kupplungsbolzen allmählich und abhängig von der Drehung zwischen Schlepper und Anhänger in bezug auf das Gestell des Anhängers nach vorn schiebt. Eine derartige nach vorn geschobene Stellung ist schematisch bei 6' angegeben. Weil der Kupplungsbolzen mit der Schüssel des Schleppers verbunden ist, bedeutet dies, dass beim Nehmen einer Kurve der Abstand zwischen der Fahrerkabine 1 und der Vorderseite des Anhängers grösser wird, so dass der in Figur 1 bei 5 angegebene Effekt vermieden wird.

Ein zusätzlicher Vorteil ist, dass der Anhänger durch diese Massnahme an der Vorderseite weniger weit ausschwenkt.

In der Praxis hat diese Massnahme gemäss der Erfindung zur Folge, dass der Anhänger ± 0,5 m länger sein kann, was einigen Kubikmetern Laderaum entspricht.

Das beim Nehmen einer Kurve nach vorn Verschieben des Kupplungsbolzens in bezug auf das Gestell des Anhängers kann in verschiedenen Weisen verwirklicht werden.

Zum Ermöglichen einer derartigen Verschiebung wird zunächst der Drehkranz in einem Hilfsrahmen montiert, der in an dem Gestell des Sattelanhängers angeordneten, oder zu diesem gehörenden Längsführungen in Längsrichtung in bezug auf das Gestell des Anhängers schieben kann.

Weiter soll der Winkel des Schleppers in bezug auf den Anhänger detektiert werden und in die gewünschte Verschiebung des Hilfsrahmens umgesetzt werden.

Dies kann z. B. in hydraulischer Weise bewirkt werden. Dazu kann der mit dem Kupplungsbolzen fest verbundene und daher mit dem Kupplungsbolzen mitdrehende Teil des Drehkranzes mit einem oder mehreren hydraulischen Zylindern versehen sein, deren eines Ende mit dem genannten Teil des Drehkranzes und das andere Ende mit dem verschiebbaren Hilfsrahmen verbunden ist. Durch die Rotation des mit dem Kupplungsbolzen mitdrehenden Teils des Drehkranzes entsteht dann ein Oelstrom, der über geeignete Leitungen einem oder mehreren hydraulischen Zylindern zugeführt wird, welche zwischen dem Hilfsrahmen und dem Gestell des Sattelanhängers verbunden sind und welche die gewünschte Verschiebung bewirken.

Die gewünschte Verschiebung des Hilfsrahmens in bezug auf das Gestell des Sattelanhängers kann auch mit Hilfe eines Hebelsystems erhalten werden.

Die einfachste Form eines solchen Hebelsystems ist schematisch in Figur 3 wiedergegeben.

Figur 3 zeigt schematisch in Draufsicht eine Ausführungsform der Erfindung, bei der von dem Drehkranz nur der untere Teil 20, der den Kupplungsbolzen trägt, ersichtlich ist, versehen mit einer Aussenverzahnung zum Zusammenarbeiten mit einer Kette 21, die auch um ein kleineres Zahnrad 22 geschlungen ist. Das kleinere Zahnrad 22 ist gleichfalls in dem Hilfsrahmen montiert, jedoch weiter nach hinten. Wenn der untere Teil des Drehkranzes sich dreht, weil der Schlepper eine Kurve nimmt, dreht daher das Zahnrad 22 mit.

Mit dem Zahnrad 22 ist das vordere Ende eines Hebels 23 gekuppelt. Der Hebel 23 erstreckt sich wieder nach hinten und ist in der beschriebenen Weise drehbar mit einem festen Punkt 13 auf dem Gestell des Anhängers 3 gekuppelt.

In der Ruhestellung befindet der Befestigungspunkt des Hebels 23 auf dem Zahnrad 22 sich an der Vorderseits des Zahnrades 22. Beim Drehen des Zahnrads 22 schiebt der Hebel daher dieses Zahnrad und damit den Hilfsrahmen 9 in bezug auf das Gestell des Anhängers 3 nach vorn.

In der vorliegenden Ausführungsform ist der Hebel 23 über einen Arm mit dem Zahnrad verbunden. Dieser Arm liegt in der gezeigten Ruhestellung unter dem Hebel 23 und ist also nicht sichtbar.

Mit gestrichelten Linien ist die Stellung 23' des Hebels bei einer Verdrehung des Zahnrads 22 über 90° gezeigt und ist auch der mit 24 angegebene Arm wiedergegeben.

Bei einer praktischen Ausführungsform der Erfindung kann die Dimensionierung z. B. derart gewählt werden, dass, wenn der Schlepper einen Winkel von 45° mit dem Anhänger einschliesst, die Verschiebung des Hilfsrahmens einen maximalen Wert hat. Der Durchmesser des Zahnrads 22 soll dann ein Viertel des Durchmessers des Drehkranzes sein.

Die Grösse der maximalen Verschiebung wird durch die Länge des Armes 24 bestimmt.

Bemerkt wird, dass verschiedene Modifikationen der beschriebenen Erfindung für den Fachmann nach dem Vorstehenden naheliegend sind.

So könnte statt einer Kettenübertragung eine Zahnradübertragung angewendet werden. Auch können verschiedene Uebertragungsverhältnisse benutzt werden.

Weiter kann das Zahnrad 22 oder der Teil 20 des Drehkranzes z. B. mit eine Führungsbahn in Form eines Nockens oder eines Schlitzes versehen sein, der mit dem entsprechenden Ende des Hebels zusammenarbeitet, derart, dass der Hebel nicht schwenkt und das Zahnrad oder der Drehkranz sich selbst nach vorn schiebt und dabei den Hilfsrahmen mitnimmt.

Diese und ähnliche Modifikationen werden als in den Rahmen des Erfindung fallend betrachtet.

Es wird noch bemerkt, dass der erhaltene zusätzliche benutzbare Raum auch dazu angewendet werden kann, den Schlepper kürzer zu machen oder die Fahrerkabine des Schleppers tiefer zu machen.

**Patentansprüche**

1. Kupplungseinrichtung zum Kuppeln eines Sattelschleppers (1) mit einem Sattelanhänger (3), versehen mit einem Drehkranz (10), der Rotation des Sattelschleppers relativ zum Sattelanhänger zulässt, und der einen ersten Teil umfasst, der im Betriebszustand drehfest mit dem Gestell des Sattelschleppers gekuppelt ist und einen zweiten Teil, der im Betriebszustand drehfest mit dem Gestell des Sattelanhängers gekuppelt ist, wobei einer der Teile des Drehkranzes in einem relativ zum korrespondierenden Gestell in dessen Längsrichtung verschiebbaren Hilfsrahmen montiert ist, und wobei Betätigungsmittel vorgesehen sind, die die Schiebelage des Hilfsrahmens abhängig vom Winkel zwischen dem Sattelschlepper und dem Sattelanhänger so einstellen, dass der Abstand zwischen dem Sattelschlepper und dem Sattelanhänger bei Rotation des Sattelschleppers relativ zum Sattelanhänger aus der Lage für die Geradeausfahrt zunimmt, dadurch gekennzeichnet, dass die Betätigungsmittel mindestens einen Hebel (23) umfassen, dessen eines Ende mit einem festen Punkt (13) des den verschiebbaren Hilfsrahmen (9) enthaltenden Gestells verbunden ist, und dass das andere Ende des mindestens einen Hebels (23) mit einem am Hilfsrahmen (9) montierten Zahnrad (22) gekuppelt ist, das durch eine am anderen Teil (20) des Drehkranzes angeordnete Verzahnung angetrieben wird.

2. Kupplungseinrichtung nach Anspruch 1, dadurch gekennzeichnet, dass der Durchmesser des Zahnrades (22) ein Viertel des Durchmessers des mit der Verzahnung versehenen Teiles (20) des Drehkranzes ist.

3. Sattelschlepper-Sattelanhänger-Kombination, versehen mit einer Kupplungseinrichtung nach einem der vorhergehenden Ansprüche.

## Claims

1. A coupling device adapted for coupling a tractor (1) to a trailer (3), said coupling device being provided with a turntable (10) permitting rotation of the tractor relative to the trailer and comprising a first section which, in operating condition, is rigidly coupled to the chassis of the tractor, and a second section which, in operating condition, is rigidly coupled to the chassis of the trailer, one of said sections of the turntable being mounted in a subframe permitting sliding motion relative to the corresponding chassis in the longitudinal direction thereof, and operating means being provided for adjusting the sliding position of the subframe dependently on the angle between the tractor and the trailer in such a way that the distance between the tractor and the trailer increases upon rotation of the tractor relative to the trailer out of the position for straight-on driving, characterized in that the operating means comprise at least one lever (23), one end of which is connected to a fixed point (13) of the chassis containing the slidable subframe (9), and that the other end of at least one lever (23) is coupled to a gearwheel (22) mounted on the subframe (9) and driven by a gearing mounted on the other section (20) of the turntable.

2. A coupling device as claimed in claim 1, characterized in that the diameter of the gearwheel (22) is one fourth of the diameter of the geared section (20) of the turntable.

3. A tractor-trailer combination provided with a coupling device as claimed in one of the preceding claims.

## Revendications

1. Dispositif de couplage pour coupler un tracteur pour semi-remorque (1) à une semi-remorque (3), ledit dispositif étant muni d'une plaque tournante (10) permettant une rotation du tracteur par rapport à la semi-remorque, et comprenant une première section couplée, en état de service, rigidement au châssis du tracteur et une deuxième section qui, en état de service, est couplé rigidement au châssis de la semi-remorque, l'une desdites sections de la plaque tournante étant montée dans un faux-châssis permettant un déplacement par rapport au châssis correspondant en direction longitudinale dudit châssis, des moyens d'actionnement étant prévus pour ajuster la position de déplacement du faux-châssis dépendant de l'angle entre le tracteur et la semi-remorque en sorte que la distance entre le tracteur et la semi-remorque, en cas de rotation du tracteur par rapport à la semi-remorque, augmente à partir de la direction toute droite, caractérisé en ce que les moyens d'actionnement comprennent au moins un levier (23) dont l'une extrémité est jointe à un point fixe (13) du châssis contenant le faux-châssis (9) mobile, et que l'autre extrémité d'au moins un levier (23) est couplée à une roue dentée (22) montée sur le faux-chassis (9) et actionnée par un engrenage prévu sur l'autre section (20) de la plaque tournante.

2. Un dispositif de couplage selon la revendication 1, caractérisé en ce que le diamètre de la roue dentée (22) est un quart du diamètre de la section (20) à engrenage de la plaque tournante.

3. Une combinaison de tracteur semi-remorque ayant un dispositif de couplage selon l'une quelconque des revendications précédentes.

FIG.1

FIG.2

FIG. 3